# EUROPÄISCHE PATENTSCHRIFT

(11) **EP 3 538 393 B1**
(45) Veröffentlichungstag und Bekanntmachung des Hinweises auf die Patenterteilung: **29.07.2020**
(21) Anmeldenummer: 17783737.4
(22) Anmeldetag: 22.09.2017
(51) Int. Cl.: B60K 35/00

(54) **FAHRZEUG-BENUTZER-SCHNITTSTELLE MIT BERÜHRSENSITIVER EINGABEFLÄCHE UND AN DER EINGABEFLÄCHE BEWEGLICH BEFESTIGTEM BETÄTIGUNGSTEIL UND VERRINGERTEM VERLETZUNGSRISIKO**
VEHICLE USER INTERFACE WITH TOUCHSCREEN, ACTUATABLE SWITCH FIXED ON THE TOUCHSCREEN AND LOW RISK OF INJURY
INTERFACE POUR LA COMMANDE D'UN VÉHICULE AVEC DALLE TACTILE, INTERRUPTEUR FIXÉ SUR LA DALLE ET RISQUE DE BLESSURE RÉDUIT

(30) Priorität: 09.11.2016 DE 102016121457
(43) Veröffentlichungstag der Anmeldung: 18.09.2019
(73) Patentinhaber: PREH GmbH, 97616 Bad Neustadt a.d. Saale (DE)
(72) Erfinder: LUST, Matthias, 97456 Dittelbrunn (DE); DANI, Alain, 80997 München (DE)
(74) Vertreter: Lohmanns, Bernard
(86) Internationale Anmeldenummer: PCT/EP2017/074030
(87) Internationale Veröffentlichungsnummer: WO 2018/086793

(56) Entgegenhaltungen:
- EP-B1- 2 062 121
- DE-A1-102010 010 574
- DE-A1-102013 003 942
- DE-A1-102013 016 805
- US-A1- 2004 252 473
- US-A1- 2008 238 879
- US-B1- 7 597 393

## Beschreibung

Die Erfindung betrifft eine Fahrzeug-Benutzer-Schnittstelle mit einem Gehäuse, mit einem Träger und mit einer an dem Träger ausgebildeten berührsensitiven Eingabefläche. Diese Eingabeflächen sind in einer Ausgestaltung mit einer elektronischen Pixelmatrixanzeige kombiniert und werden als Touchscreen bezeichnet. In einer anderen Ausgestaltung handelt es sich um eine anzeigelose berührempfindliche Eingabefläche, welche als Touchpad bezeichnet wird.
Vorbekannte Eingabegeräte dieser Gattung insbesondere bei der Verwendung in Kraftfahrzeugen weisen Betätigungsteile auf, die beweglich an und auf der berührsensitiven Eingabefläche sind, wobei die der berührsensitiven Eingabefläche zugeordnete Detektionseinrichtung nicht nur zur Berührdetektion auf der Eingabefläche sondern auch zur Positionsdetektion des Betätigungsteils verwendet wird. Gleichzeitig steigert die Verwendung eines beweglich gelagerten Betätigungsteils anstelle einer Fahrzeug-Benutzer-Schnittstelle mit ausschließlich über eine berührsensitiven Eingabefläche möglichen Eingabe, d.h ein "reines" Touchpad oder ein "reiner" Touchscreen, die Bediensicherheit und den Bedienkomfort, da der Bediener immer noch an herkömmliche Eingabegeräte mit beweglich gelagerten Betätigungsteilen gewöhnt ist und andererseits eine Bedienung auch ohne visuelle Kontrolle und damit ohne Ablenkung vom Verkehrsgeschehen durch Ergreifen des Betätigungsteils und damit erfolgendem haptischem Feedback durchführbar ist. Bisherige Ansätze dieses letzten Prinzips machten sich bisher die kapazitive Berührdetektion zu Nutze, indem das auf einem kapazitiven Touchscreen oder kapazitiven Touchpad angeordnete Betätigungsteil mit der jeweiligen Messkapazität wechselwirkte. Es hat sich aber gezeigt, dass durch die Anordnung des Betätigungsteils auf der Eingabefläche und der sich durch das Betätigungsteil ergebende Überstand gegenüber der berührempfindlichen Eingabefläche das Verletzungsrisiko in einem Fall einer Fahrzeugkollision erhöht ist, weil insbesondere die Eingabefläche in der Regel durch vergleichsweise mechanisch stabile Schichten aus Glas oder Kunststoff definiert ist, wodurch im Vergleich zu herkömmlichen Eingabegeräten, wie Drehstellern noch erhöht ist.

Die DE 10 2013 003942 A1 offenbart eine Fahrzeug-Benutzer-Schnittstelle mit einem Gehäuse, einem Träger und einer an dem Träger ausgebildeten berührsensitiven Eingabefläche, wobei Mittel vorgesehen sind, um bei einer einen vorgegebenen Betrag und/oder Richtung überschreitenden und auf die Eingabefläche einwirkenden Aufschlagskraft eine der Aufschlagkraft folgenden Aufschlagsverlagerung der Eingabefläche aus einer Bedienstellung in eine Versenkstellung zu ermöglichen, wobei dieser Aufschlagsverlagerung keine Schalt- oder Steuerfunktion zugeordnet ist. Die EP 2 062 121 B1 offenbart ein auf einer berührsensitiven Eingabefläche angeordnetes Betätigungsteil.

Vor diesem Hintergrund bestand Bedarf nach einer Lösung für eine gattungsgemäße Fahrzeug-Benutzer-Schnittstelle mit im Vergleich verringertem Verletzungsrisiko. Diese Aufgabe wird durch eine Fahrzeug-Benutzer-Schnittstelle gemäß Anspruch 1 gelöst. Eine gleichermaßen vorteilhafte Verwendung ist Gegenstand des nebengeordneten Verwendungsanspruchs. Vorteilhafte Ausgestaltungen sind jeweils Gegenstand der abhängigen Ansprüche. Es ist darauf hinzuweisen, dass die in den Ansprüchen einzeln aufgeführten Merkmale in beliebiger, technologisch sinnvoller Weise miteinander kombiniert werden können und weitere Ausgestaltungen der Erfindung aufzeigen. Die Beschreibung, insbesondere im Zusammenhang mit den Figuren, charakterisiert und spezifiziert die Erfindung zusätzlich.

Die Erfindung betrifft eine Fahrzeug-Benutzer-Schnittstelle. Die Fahrzeug-Benutzer-Schnittstelle im Sinne der Erfindung meint eine Einrichtung zur Vornahme von Steuerungseingaben betreffend das Fahrzeug oder Fahrzeugkomponenten. Als Benutzer, auch Bediener genannt, wird unter anderem der Fahrer des Fahrzeugs verstanden. Neben der erfindungsgemäßen berührsensitiven Eingabefläche weist die Fahrzeug-Benutzer-Schnittstelle erfindungsgemäß wenigstens ein auf der berührsensitiven Eingabefläche angeordnetes Betätigungsteil, das beweglich an der berührsensitiven Eingabefläche gelagert ist. Neben der über die Eingabefläche und neben der über das Betätigungsteil gegebenen Eingabeoption können weitere Bedienoptionen durch weitere Betätigungsteile vorgesehen sein.

Erfindungsgemäß sind ferner Mittel vorgesehen, um bei einer einen vorgegebenen Betrag und/oder Richtung überschreitenden und auf das Betätigungsteil einwirkenden Aufschlagskraft eine der Aufschlagkraft folgenden Aufschlagsverlagerung wenigstens des Betätigungsteils aus eine Bedienstellung in eine Versenkstellung zu ermöglichen, wobei dieser Aufschlagsverlagerung keine Schalt- oder Steuerfunktion zugeordnet ist. Ziel dieser Verlagerung ist die Bauhöhe der Fahrzeug-Benutzer-Schnittstelle zumindest über dem von der berührsensitiven Eingabefläche beschriebenen Bereich zu verringern. In der Versenkstellung muss nicht zwingend die Funktionalität des Betätigungsteils und/oder der berührsensitiven Eingabefläche erhalten bleiben. Als eine Aufschlagkraft wird beispielsweise eine Kraft verstanden, die senkrecht auf der Eingabefläche steht oder einen spitzen Winkel mit einer Lotrechten auf die Eingabefläche steht und auf das Betätigungsteil einwirkt.

Bevorzugt sind die Mittel ausgelegt, dass das Betätigungsteil nicht reversibel aus der Bedienstellung in die Versenkstellung verlagert werden kann, um einen Austausch der Fahrzeug-Schnittstelle im Falle einer Fahrzeugkollision und somit eine entsprechende Funktionalität nach der Kollision zu gewährleisten.

Gemäß einer bevorzugten Ausgestaltung weisen die Mittel eine oder mehrere Sollbruchstellen und/oder sich plastisch verformbare Bereiche und/oder sich elastische verformbare Bereiche, wie Biege- oder Faltstellen auf. Als Sollbruchstellen werden solche Materialschwächungen, wie Querschnittsminderungen oder Perforierungen verstanden, die im Falle einer übermäßigen Aufschlagskraft zu einem Bruch und letztlich damit zu einem Verlassen der Bedienstellung des Betätigungsteils führen.

Gemäß einer bevorzugten Ausgestaltung sind die Mittel ausgelegt, eine Aufschlagsverlagerung des Betätigungsteils samt des Trägers zu ermöglichen.

Erfindungsgemäß sind die Mittel am Träger ausgebildet. Beispielsweise sind die vorgenannten Stützen in nachgebenden trägerseitigen Aufnahmen aufgenommen.

Erfindungsgemäß sind die Mittel ausschließlich auf der der berührsensitiven Eingabefläche abgewandten Seite des Trägers ausgebildet, um eine Verletzung des Bedieners auszuschließen.

Erfindungsgemäß sind die Mittel in eine die berührsensitive Eingabefläche aufweisende Schicht des Trägers integriert. Beispielsweise sind die Sollbruchstellen oder die elastisch oder plastisch verformbaren Bereiche in einem das Betätigungsteil umgebenden Abschnitt des Trägers vorgesehen.

Bevorzugt ist das Betätigungsteil drehbeweglich gelagert.

Die Erfindung betrifft ferner die Verwendung der Fahrzeug-Benutzer-Schnittstelle in einer seiner zuvor beschriebenen Ausführungsformen in einem Kraftfahrzeug.

Die Erfindung wird anhand der nachfolgenden Figuren näher erläutert. Die Figuren sind dabei nur beispielhaft zu verstehen und stellen lediglich eine bevorzugte Ausführungsvariante dar. Es zeigen:
Fig. 1a und 1b zeigen eine erste Ausführungsform einer nicht-erfindungsgemäßen Fahrzeug-Benutzer-Schnittstelle in jeweils der Bedienstellung und der Versenkstellung;
Fig. 2a und 2b zeigen eine zweite Ausführungsform einer nicht-erfindungsgemäßen Fahrzeug-Benutzer-Schnittstelle in jeweils der Bedienstellung und der Versenkstellung;
Fig. 3a und 3b zeigen eine Ausführungsform einer erfindungsgemäßen Fahrzeug-Benutzer-Schnittstelle in jeweils der Bedienstellung und der Versenkstellung.

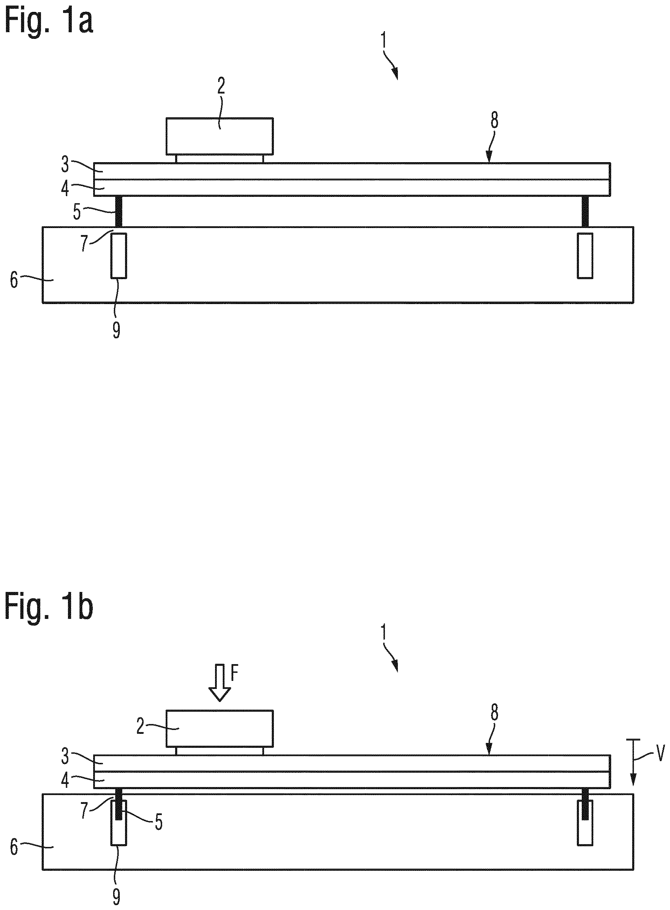

Figur 1a zeigt eine erste Ausführungsform einer nicht-erfindungsgemäßen Fahrzeug-Benutzer-Schnittstelle 1 in der Bedienstellung. Figur 1b zeigt die selbe Fahrzeug-Benutzer-Schnittstelle 1 in der Versenkstellung. Die Fahrzeug-Benutzer-Schnittstelle 1 weist ein Gehäuse 6 und einen Träger 3, 4 auf. Der Träger 3, 4 stützt sich über Stützen 5 am Träger ab. Der Träger 3, 4 weist eine dem Benutzer abgewandt angeordnete Grundschicht 4 und einen dem Benutzer zugewandten Bedienschichtaufbau 3 auf, die eine berührsensitive Eingabefläche 8 definiert und in die die zugehörige kapazitive, resistive oder induktive Detektionseinrichtung integriert ist. Beispielsweise handelt es sich bei dem Bedienschichtaufbau 3 um einen Touchscreen oder ein Touchpad. Die Fahrzeug-Benutzer-Schnittstelle 1 weist mehrere Eingabeoptionen auf. Neben der Möglichkeit der Berühreingabe auf der durch den Bedienschichtaufbau 3 definierten berührsensitiven Eingabefläche 8 ist ferner ein Betätigungsteil 2 vorgesehen, das auf der berührsensitiven Eingabefläche 8 angeordnet und an dieser gelagert ist. Der Bedienschichtaufbau 3 ist nur schematisch dargestellt und weist beispielsweise ein Display, eine oder mehrere Klebeschichten, eine transparente Abdeckung, wie ein Verbundglas, Sicherheitsglas oder eine transparente Abdeckung aus Kunststoff, Touchelektroden, Touchfolien und die zugehörige Elektronik auf. Die Stützen 5 sind in einer zur Eingabefläche 8 parallel verlaufenden Richtung elastisch nachgebend ausgestaltet, so dass eine Beweglichkeit des Trägers 3, 4 relativ zum Gehäuse 6 ermöglicht ist, um beispielsweise durch einen nicht dargestellten Aktor den Träger 3, 4 zur Erzeugung eines haptischen Feedbacks motorisch antreiben zu können. In dem unter den Stützen 5 befindlichen Bereich sind Sollbruchstellen 7 in Form von Materialschwächungen im Gehäuse 6, also ausschließlich gehäuseseitig, vorgesehen, die bei einer einen vorgegebenen Betrag und/oder Richtung überschreitenden und auf das Betätigungsteil 2 einwirkenden Aufschlagskraft F eine der Aufschlagkraft F folgenden Aufschlagsverlagerung V des Betätigungsteils 2 samt des Trägers 3, 4 aus der in Figur 1a gezeigten Bedienstellung in eine in Figur 1b gezeigte Versenkstellung zu ermöglichen, wobei dieser Aufschlagsverlagerung V keine Schalt- oder Steuerfunktion zugeordnet ist.

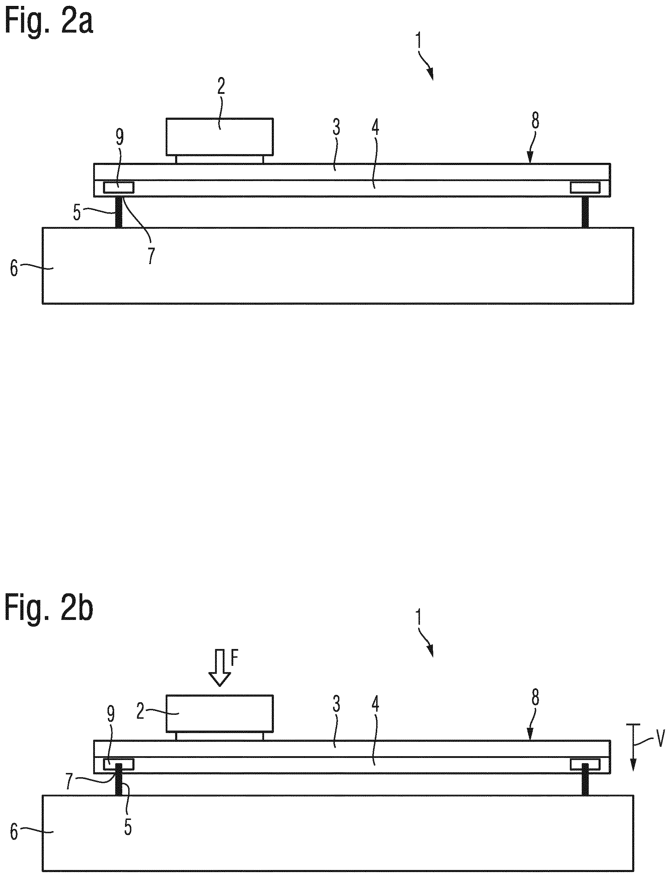

Figur 2a zeigt eine zweite Ausführungsform einer nicht-erfindungsgemäßen Fahrzeug-Benutzer-Schnittstelle 1 in der Bedienstellung. Figur 2b zeigt die selbe Fahrzeug-Benutzer-Schnittstelle 1 in der Versenkstellung. Die Fahrzeug-Benutzer-Schnittstelle 1 weist wiederum ein Gehäuse 6 und einen Träger 3, 4 auf. Der Träger 3, 4 stützt sich über Stützen 5 am Träger ab. Der Träger 3, 4 weist eine dem Benutzer abgewandt angeordnete Grundschicht 4 und einen dem Benutzer zugewandten Bedienschichtaufbau 3 auf, die eine berührsensitive Eingabefläche 8 definiert und in die die zugehörige kapazitive, resistive oder induktive Detektionseinrichtung integriert ist. Beispielsweise handelt es sich bei dem Bedienschichtaufbau 3 um einen Touchscreen oder ein Touchpad. Die Fahrzeug-Benutzer-Schnittstelle 1 weist mehrere Eingabeoptionen auf. Neben der Möglichkeit der Berühreingabe auf der durch den Bedienschichtaufbau 3 definierten berührsensitiven Eingabefläche 8 ist ferner ein Betätigungsteil 2 vorgesehen, das auf der berührsensitiven Eingabefläche 8 angeordnet und an dieser gelagert ist. Der Bedienschichtaufbau 3 ist nur schematisch dargestellt und weist wie die erste Ausführungsform beispielsweise ein Display, eine oder mehrere Klebeschichten, eine transparente Abdeckung, wie ein Verbundglas, Sicherheitsglas oder eine transparente Abdeckung aus Kunststoff, Touchelektroden, Touchfolien und die zugehörige Elektronik auf. Die Stützen 5 sind in einer zur Eingabefläche 8 parallel verlaufenden Richtung elastisch nachgebend ausgestaltet, so dass eine Beweglichkeit des Trägers 3, 4 relativ zum Gehäuse 6 ermöglicht ist, um beispielsweise durch einen nicht dargestellten Aktor den Träger 3, 4 zur Erzeugung eines haptischen Feedbacks motorisch antreiben zu können. In dem über den Stützen 5 befindlichen Bereich sind Sollbruchstellen 7 in Form von Materialschwächungen in dem Träger 3, 4 also ausschließlich trägerseitig vorgesehen. Diese Sollbruchstellen 7 sind hier insbesondere in einer von der berührsensitiven Eingabefläche 8 abgewandten Seite des Trägers 3, 4 insbesondere der Grundschicht eingebracht, und sind vorgesehen, bei einer einen vorgegebenen Betrag und/oder Richtung überschreitenden und auf das Betätigungsteil 2 einwirkenden Aufschlagskraft F eine der Aufschlagkraft F folgenden Aufschlagsverlagerung V des Betätigungsteils 2 samt des Trägers 3, 4 aus der in Figur 2a gezeigten Bedienstellung in eine in Figur 1b gezeigte Versenkstellung zu ermöglichen, wobei dieser Aufschlagsverlagerung V keine Schalt- oder Steuerfunktion zugeordnet ist.

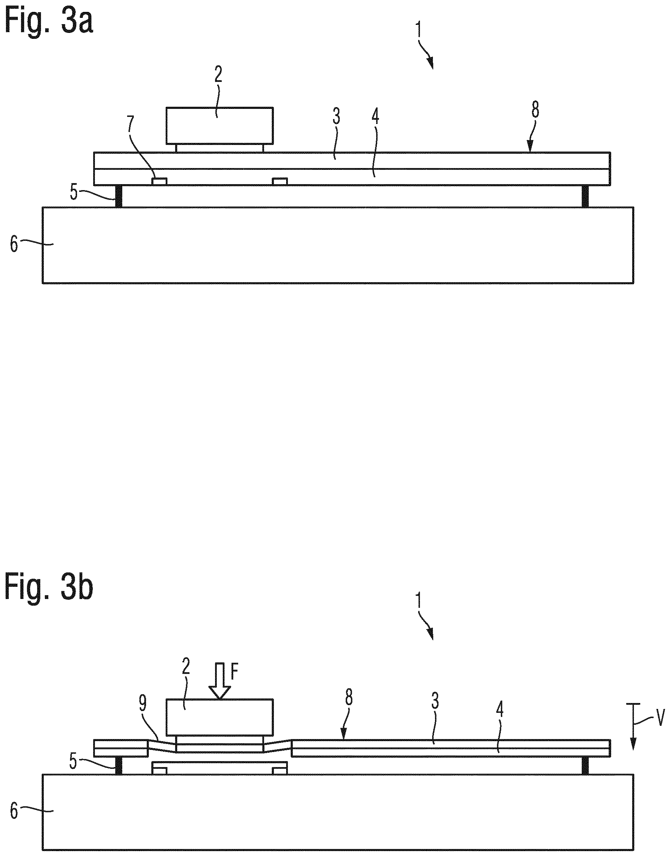

Figur 3a zeigt eine Ausführungsform einer erfindungsgemäßen Fahrzeug-Benutzer-Schnittstelle 1 in der Bedienstellung. Figur 3b zeigt die selbe Fahrzeug-Benutzer-Schnittstelle 1 in der Versenkstellung. Die Fahrzeug-Benutzer-Schnittstelle 1 weist wiederum ein Gehäuse 6 und einen Träger 3, 4 auf. Der Träger 3, 4 stützt sich über Stützen 5 am Träger ab. Der Träger 3, 4 weist eine dem Benutzer abgewandt angeordnete Grundschicht 4 und einen dem Benutzer zugewandten Bedienschichtaufbau 3 auf, die eine berührsensitive Eingabefläche 8 definiert und in die die zugehörige kapazitive, resistive oder induktive Detektionseinrichtung integriert ist. Beispielsweise handelt es sich bei dem Bedienschichtaufbau 3 um einen Touchscreen oder ein Touchpad. Die Fahrzeug-Benutzer-Schnittstelle 1 weist mehrere Eingabeoptionen auf. Neben der Möglichkeit der Berühreingabe auf der durch den Bedienschichtaufbau 3 definierten berührsensitiven Eingabefläche 8 ist ferner ein Betätigungsteil 2 vorgesehen, das auf der berührsensitiven Eingabefläche 8 angeordnet und an dieser gelagert ist. Der Bedienschichtaufbau 3 ist nur schematisch dargestellt und weist wie die erste Ausführungsform beispielsweise ein Display, eine oder mehrere Klebeschichten, eine transparente Abdeckung, wie ein Verbundglas, Sicherheitsglas oder eine transparente Abdeckung aus Kunststoff, Touchelektroden, Touchfolien und die zugehörige Elektronik auf. Die Stützen 5 sind in einer zur Eingabefläche 8 parallel verlaufenden Richtung elastisch nachgebend ausgestaltet, so dass eine Beweglichkeit des Trägers 3, 4 relativ zum Gehäuse 6 ermöglicht ist, um beispielsweise durch einen nicht dargestellten Aktor den Träger 3, 4 zur Erzeugung eines haptischen Feedbacks motorisch antreiben zu können.

In dem das Betätigungsteil 2 umgebenden, zwischen den Stützen 5 befindlichen Bereich sind Sollbruchstellen 7 in Form von Materialschwächungen in dem Träger 3, 4 also ausschließlich trägerseitig vorgesehen. Diese Sollbruchstellen 7 sind hier insbesondere in einer von der berührsensitiven Eingabefläche 8 abgewandten Seite des Trägers 3, 4 insbesondere der Grundschicht eingebracht, und sind vorgesehen, bei einer einen vorgegebenen Betrag und/oder Richtung überschreitenden und auf das Betätigungsteil 2 einwirkenden Aufschlagskraft F eine der Aufschlagkraft F folgenden Aufschlagsverlagerung V des Betätigungsteils 2 mit Teilbereichen des Trägers 3, 4 aus der in Figur 2a gezeigten Bedienstellung in eine in Figur 1b gezeigte Versenkstellung zu ermöglichen, wobei dieser Aufschlagsverlagerung V keine Schalt- oder Steuerfunktion zugeordnet ist. Bei der vorliegenden Ausführungsform kommt es zu einem Ausbrechen des unter dem Betätigungsteil 2 angeordneten Abschnitts der Grundschicht 4 des Trägers 3, 4. Der Bedienschichtaufbau 3 wird zumindest in dem das Betätigungsteil 2 umgebenden Bereich 9 eine plastische oder elastische Verformung auf, so dass insgesamt das Betätigungsteil 2 aus der in Fig. 3a gezeigten Bedienstellung in die in Fig. 3b gezeigte Versenkstellung verlagert ist.

## Patentansprüche

1. Fahrzeug-Benutzer-Schnittstelle (1) mit einem Gehäuse (6), mit einem Träger (3, 4) und mit einer an dem Träger (3,4) ausgebildeten berührsensitiven Eingabefläche (8) und mit einem auf der Eingabefläche (8) angeordneten Betätigungsteil (2), das beweglich an der Eingabefläche (8) gelagert ist, wobei Mittel (7, 9) vorgesehen sind, um bei einer einen vorgegebenen Betrag und/oder Richtung überschreitenden und auf das Betätigungsteil einwirkenden Aufschlagskraft (F) eine der Aufschlagkraft (F) folgenden Aufschlagsverlagerung (V) wenigstens des Betätigungsteils (2) aus einer Bedienstellung in eine Versenkstellung zu ermöglichen, wobei dieser Aufschlagsverlagerung (V) keine Schalt- oder Steuerfunktion zugeordnet ist, wobei die Mittel (7, 9) ausschließlich auf der der berührsensitiven Eingabefläche (8) abgewandten Seite des Trägers (3, 4) ausgebildet und in eine die berührsensitive Eingabefläche aufweisende Schicht (3) des Trägers (3, 4) integriert sind.

2. Fahrzeug-Benutzer-Schnittstelle (1) gemäß Anspruch 1, wobei die Mittel (7,9) derart ausgelegt sind, dass das Betätigungsteil (2) nicht reversibel aus der Bedienstellung in die Versenkstellung verlagert werden kann.

3. Fahrzeug-Benutzer-Schnittstelle (1) gemäß einem der vorhergehenden Ansprüche, wobei die Mittel (7, 9) eine oder mehrere Sollbruchstellen und/oder sich plastisch verformbare Bereiche und/oder sich elastische verformbare Bereiche aufweisen.

4. Fahrzeug-Benutzer-Schnittstelle (1) gemäß einem der vorhergehenden Ansprüche, wobei die Mittel (7, 9) ausgelegt sind, eine Aufschlagsverlagerung (V) des Betätigungsteils samt des Trägers zu ermöglichen.

5. Fahrzeug-Benutzer-Schnittstelle (1) gemäß einem der vorhergehenden Ansprüche, wobei das Betätigungsteil (2) drehbeweglich gelagert ist.

6. Kraftfahrzeug mit einer Fahrzeug-Benutzer-Schnittstelle (1) gemäß einem der vorhergehenden Ansprüche.

## Claims

1. Vehicle/user interface (1) having a housing (6), having a carrier (3, 4) and having a touch-sensitive input area (8), which is formed on the carrier (3, 4), and having an operating part (2) which is arranged on the input area (8) and is movably mounted on the input area (8), wherein means (7, 9) are provided in order to allow, in the event of an impact force (F) which exceeds a prespecified magnitude and/or direction and acts on the operating part, an impact displacement (V), which follows the impact force (F), of at least the operating part (2) from an operator control position to a recessed position, wherein this impact displacement (V) does not have an associated switching or control function, wherein the means (7, 9) are formed solely on that side of the carrier (3, 4) which is averted from the touch-sensitive input area (8) and are integrated into a layer (3), which has the touch-sensitive input area, of the carrier (3, 4).

2. Vehicle/user interface (1) according to Claim 1, wherein the means (7, 9) are designed in such a way that the operating part (2) cannot be reversibly displaced from the operator control position to the recessed position.

3. Vehicle/user interface (1) according to either of the preceding claims, wherein the means (7, 9) have one or more predetermined breaking points and/or plastically deformable regions and/or elastically deformable regions.

4. Vehicle/user interface (1) according to one of the preceding claims, wherein the means (7, 9) are designed to allow an impact displacement (V) of the operating part together with the carrier.

5. Vehicle/user interface (1) according to one of the preceding claims, wherein the operating part (2) is mounted in a rotationally movable manner.

6. Motor vehicle having a vehicle/user interface (1) according to one of the preceding claims.

## Revendications

1. Interface véhicule-utilisateur (1) comprenant un boîtier (6), un support (3, 4) et une surface de saisie tactile (8) réalisée sur le support (3, 4), et une partie d'actionnement (2) disposée sur la surface de saisie (8), qui est supportée de manière déplaçable sur la surface de saisie (8), des moyens (7, 9) étant prévus pour permettre, dans le cas d'une force d'impact (F) dépassant une valeur et/ou une direction prédéfinies et agissant sur la partie d'actionnement, un transfert de l'impact (V), résultant de la force d'impact (F), d'au moins la partie d'actionnement (2) d'une position de commande à une position renfoncée, aucune fonction de commutation ou de commande n'étant associée à ce transfert d'impact (V), les moyens (7, 9) étant réalisés exclusivement sur le côté du support (3, 4) opposé à la surface de saisie tactile (8) et étant intégrés dans une couche (3) du support (3, 4) présentant la surface de saisie tactile.

2. Interface véhicule-utilisateur (1) selon la revendication 1, dans laquelle les moyens (7, 9) sont conçus de telle sorte que la partie d'actionnement (2) ne puisse pas être déplacée de manière réversible de la position de commande dans la position renfoncée.

3. Interface véhicule-utilisateur (1) selon l'une quelconque des revendications précédentes, dans laquelle les moyens (7, 9) présentent une ou plusieurs zones destinées à la rupture et/ou régions déformables plastiquement et/ou régions déformables élastiquement.

4. Interface véhicule-utilisateur (1) selon l'une quelconque des revendications précédentes, dans laquelle les moyens (7, 9) sont conçus pour permettre un transfert de l'impact (V) de la partie d'actionnement conjointement avec le support.

5. Interface véhicule-utilisateur (1) selon l'une quelconque des revendications précédentes, dans laquelle la partie d'actionnement (2) est supportée de manière déplaçable en rotation.

6. Véhicule automobile comprenant une interface véhicule-utilisateur (1) selon l'une quelconque des revendications précédentes.
